(19) Europäisches Patentamt
European Patent Office
Office européen des brevets

(11) **EP 2 147 223 B1**

(12) **EUROPÄISCHE PATENTSCHRIFT**

(45) Veröffentlichungstag und Bekanntmachung des Hinweises auf die Patenterteilung:
**02.05.2012 Patentblatt 2012/18**

(21) Anmeldenummer: **08715723.6**

(22) Anmeldetag: **11.02.2008**

(51) Int Cl.:
***F16D 21/06*** *(2006.01)*          ***F16D 23/12*** *(2006.01)*

(86) Internationale Anmeldenummer:
**PCT/EP2008/001011**

(87) Internationale Veröffentlichungsnummer:
**WO 2008/131815 (06.11.2008 Gazette 2008/45)**

(54) **DOPPELKUPPLUNGSANORDNUNG MIT ELEKTROMECHANISCHEM AUSRÜCKSYSTEM**

DOUBLE CLUTCH ARRANGEMENT HAVING ELECTROMECHANICAL DISENGAGEMENT SYSTEM

ENSEMBLE EMBRAYAGE DOUBLE MUNI D'UN SYSTÈME DE DÉBRAYAGE ÉLECTROMÉCANIQUE

(84) Benannte Vertragsstaaten:
**DE FR GB**

(30) Priorität: **30.04.2007 DE 102007020381**

(43) Veröffentlichungstag der Anmeldung:
**27.01.2010 Patentblatt 2010/04**

(73) Patentinhaber: **BorgWarner, Inc.**
**Auburn Hills, MI 48326-2872 (US)**

(72) Erfinder: **HAUCK, Hans, Jürgen**
**74523 Schwäbisch Hall (DE)**

(74) Vertreter: **Leckel, Ulf**
**Leckel Patentanwaltskanzlei**
**P6 Nr.10 (2 Floor)**
**68161 Mannheim (DE)**

(56) Entgegenhaltungen:
**EP-A- 1 521 003          DE-A1- 10 334 867**
**DE-A1- 10 349 564          FR-A- 1 299 276**
**US-A1- 2001 006 921**

**Beschreibung**

Die Erfindung betrifft ein Kupplungssystem für Kraftfahrzeugantriebe mit einer Kupplungseingangswelle und mindestens einer Getriebeeingangswelle, wobei die Getriebeeingangswelle über eine vorzugsweise im Getriebenassraum gelegene, vorzugsweise flüssigkeitsgeschmierte und - gekühlte Reibkupplung mit der Kupplungseingangswelle verbunden ist und wobei mindestens eine Reibpaarung über ein Stellglied zum Einkuppeln gegen einen Anschlag gepresst wird.

Eine Reibpaarung besteht aus mindestens zwei auf der Antriebsseite befindlichen Reibflächen und mindestens zwei auf der Abtriebsseite befindlichen Reibflächen.

Aus der EP 1 521 003 A1 ist ein derartiges Kupplungssystem bekannt. Das System beschreibt eine Mehrfachlamellenkupplung mit mehreren hydraulischen Stellgliedern. Die hydraulischen Stellglieder pressen jeweils ein Lamellenpaket zum Einkuppeln gegen einen Anschlag. Die Dynamik derartiger Stellglieder ist u.a. von der Strömungsgeschwindigkeit der Hydraulikflüssigkeit abhängig.

Die DE 103 34 867 A1 beschreibt ein Kupplungssystem, bei dem das Stellglied Stellgliedstangen, Betätigungshebel und Ausrücklager aufweist. Hinsichtlich des Antriebs für die Stellgliedstangen enthält die DE 103 34 867 A1 keine näheren Angaben.

Die US 2001/0006921 A1 beschreibt eine Betätigungseinrichtung für eine Kupplung, wobei die Betätigungseinrichtung durch einen elektrischen Motor angetrieben wird, der über einen rotierbaren Nocken und einen Hebel auf die Kupplung einwirkt.

Bei den vorstehend beschriebenen Kupplungssystemen besteht der Nachteil, dass diese relativ träge reagieren und überdies nur grob regelbar sind.

Der vorliegenden Erfindung liegt die Aufgabe zugrunde, ein Kupplungssystem zu entwickeln, das bei mindestens einer Kupplung - bei verbesserter Dynamik präzise, sicher steuer- und/oder regelbar sowie energiesparend ist.

Diese Aufgabe wird mit den Merkmalen des Anspruchs 1 gelöst. Dazu umfasst das Stellglied zunächst einen elektrischen Antrieb, ein Einrücklager und mindestens ein Hebelgetriebe. Durch diese elektromechanische Betätigung ist neben einem Einsatz in einer flüssigkeitsgeschmierten Lamellenkupplung auch die Verwendung bei einer Trockenkupplung besonders vorteilhaft, da in diesem Fall der Kupplungsraum vollständig ölfrei bzw. trocken ist. Das erleichtert sowohl die Konstruktion als auch die Montage. Durch eine entsprechende Gestaltung einer Kurvenscheibe kann eine bestimmte Drehwinkel-Weg-Kennlinie festgelegt werden. Aus der Drehwinkelveränderung der Kurvenscheibe wird eine axiale Hubänderung des jeweiligen Einrücklagers. Die Kontur der Kurvenscheibe ist so gestaltet, dass sie zur Überbrückung des Kupplungslüftspiels nur einen kleinen Drehwinkel benötigt, während sie im Bereich des Anlegepunktes - also im Regelbereich - für eine kleine Wegänderung einen großen Drehwinkel verwendet.

Das einzelne Einrücklager bildet die Schnittstelle zwischen den rotierenden Kupplungsteilen wie Lamellenträgern, Lamellenpaketen u.s.w. und dem ortsfesten Getriebegehäuse mit dem daran befestigten elektromechanischen Betätigungsmechanismus. Diese elektromechanische Aktuatorik wird pro Kupplung jeweils gebildet durch einen Einrückhebel und eine diesen auslenkende Kurvenscheibe. Die Kurvenscheibe wird vorzugsweise durch einen Elektromotor - ggf. auch über ein zwischengeschaltetes Getriebe - angetrieben.

Mindestens ein Hebelgetriebe des Kupplungssystems ist eine Membranfeder. U.a. die als Hebelring gestaltete Membranfeder ermöglicht eine konstruktiv wählbare Übersetzung von Betätigungskraft und Betätigungsweg.

Die Membranfedern belasten mit einer bestimmbaren Vorlast die jeweiligen Einrücklager und wirken somit als Rückstellfedern, die bei einem störungsbedingten Zusammenbrechen der Stromversorgung ein selbsttätiges Öffnen der Kupplung einleiten.

Weitere Einzelheiten der Erfindung ergeben sich aus den Unteransprüchen und der nachfolgenden Beschreibung schematisch dargestellter Ausführungsformen:

Figur 1:    Teillängsschnitt durch eine Doppelkupplung mit elektromechanischer Einkuppelbewegung;

Figur 2:    wie Figur 1, jedoch mit federmechanischer Einkuppelbewegung;

Figur 3:    Teilansicht der Figur 1 mit eingezeichneten Hebelverhältnissen und Kräften.

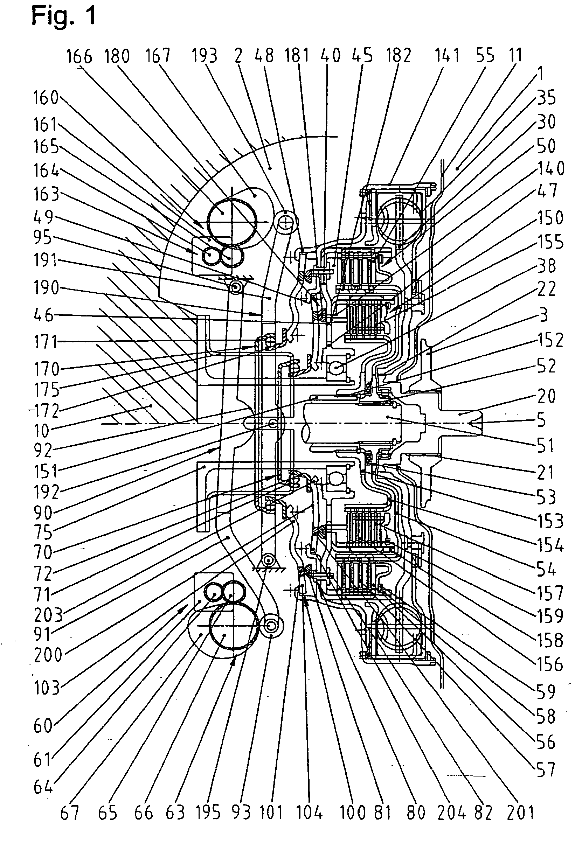

Figur 1 zeigt eine Doppelkupplung mit zwei nasslaufenden Reibkupplungen 50, 150. Diese kraftschlüssigen Schaltkupplungen haben zwei radial hintereinander konzentrisch angeordnete Lamellenpakete 55, 155. Demnach sitzt das erste Lamellenpaket 55 auf einem größeren Radius als das zweite 155. Die beiden Kupplungen 50, 150 werden mechanisch oder elektromechanisch geschlossen. Das Lösen der einzelnen Kupplung 50, 150 erfolgt elektromechanisch über einen elektrischen Stellantrieb oder mechanisch über mindestens ein Federelement pro Kupplung. Die Federelemente 100, 200 sind z.B. mechanische Druckfedern. Dieses Kupplungssystem wird in der Regel in Personenkraftwagen eingesetzt.

Selbstverständlich kann die Doppelkupplung auch eine Trockenkupplung sein. Ihre Reibpaarungen bestehen sowohl antriebsals auch abtriebsseitig jeweils aus mindestens zwei Reibflächen.

Das Kupplungssystem sitzt beispielsweise zwischen einem mehrwelligen Schaltgetriebe und dem Antriebsmotor des Fahrzeugs. Der Antriebsmotor ist in der Regel ein Otto- oder Dieselmotor. Zwischen dem Antriebsmotor und dem Kupplungssystem ist oft eine Ein- oder Zweimassenschwungrad 3 montiert.

Das Motordrehmoment gelangt von der Kurbelwelle auf das Schwungrad 3, vgl. Figur 1. Letzteres sitzt über eine drehstarre Wellen-Naben-Verbindung 21 auf der Kupplungseingangswelle 20. Hinter der Wellen-Naben-Verbindung 21 verbreitert sich die Kupplungseingangswelle 20 zur Ausbildung eines Mitnehmerscheibensitzes 22. Auf dem Mitnehmerscheibensitz 22 ist die Mitnehmerscheibe 30 befestigt.

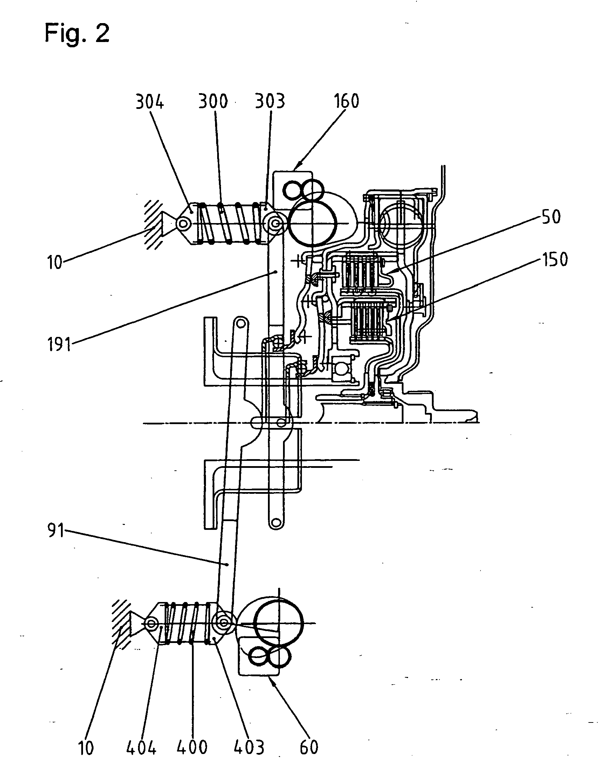

Die z.B. tiefgezogene Mitnehmerscheibe 30 ist nach den Figuren 1 und 2 über einen nasslaufenden Dämpfer 35 mit einem ersten Außenlamellenträger 40 drehstarr verbunden. Letzterer trägt einen ringförmigen Lamellentragabschnitt 58. Der erste Außenlamellenträger 40 oder der zweite Außenlamellenträger 140, die beispielsweise - zumindest bereichsweise - jeweils im Stanz- und Tiefziehverfahren hergestelltes Blechteile sind, ist an einer Hauptnabe 47 befestigt. Die Hauptnabe 47 ist mittels eines Wälzlagers 38 auf einem am Getriebegehäuse 10 abgestützten inneren Führungsrohr 75 gelagert.

Die Kombination aus Kupplungseingangswelle 20, Mitnehmerscheibe 30, Dämpfer 35, Eingangsgehäuse 141, erstem Außenlamellenträger 40, zweitem Außenlam3llenträger 140 und Hauptnabe 47 rotieren mit der Motordrehzahl. Diese Teile 20, 30, 35, 141, 40, 140, 47 befinden sich - bei dem Ausführungsbeispiel - im andauernden Eingriff mit der Kurbelwelle des Antriebsmotors.

Die Kupplungseingangswelle 20 ist z.B. über ein Rollenlager auf dem ersten Lamellenträgerflansch 53 und somit auf der ersten Getriebeeingangswelle 51 gelagert ist. Auf dieser Getriebeeingangswelle 51 ist über eine Wellen-Naben-Verbindung 52 ein erster Lamellenträgerflansch 53 angeordnet. Am Lamellenträgerflansch 53 ist ein erster topfförmiger Lamellenträger 54 angeschweißt. Zwischen dem ersten Lamellenträger 54 und dem äußeren Lamellentragabschnitt 58 des ersten Außenlamellenträgers 40 sind die Lamellen 56, 57 der ersten Kupplung 50 angeordnet. Dabei greifen die Außenlamellen 56 formschlüssig in die Profilierung des äußeren Lamellentragabschnittes 58 ein. Die Außenlamellen 56 sind an diesem Lamellentragabschnitt 58 drehsteif aber längsverschieblich gelagert. Die zwischen den Außenlamellen 56 sitzenden Innenlamellen 57 sind auf vergleichbare Weise mit der Profilierung des ersten Innenlamellenträgers 54 verbunden.

Im gekuppelten Zustand wird die Kupplungseingangswelle 20 über den ersten Außenlamellenträger 40 und den ersten Innenlamellenträger 54 mit der ersten Getriebeeingangswelle 51 verbunden. Eines der auf dieser Welle 51 angeordneten Gangräder kämmt dann kraftübertragend mit einem Gangrad auf der Getriebeausgangswelle. Die Gangräder und die Getriebeausgangswelle sind in Figur 1 nicht dargestellt.

Um die Getriebeeingangswelle 51 herum ist eine zweite als Hohlwelle ausgebildete Getriebeeingangswelle 151 angeordnet. Am vorderen - zur Kupplungseingangswelle 20 hin orientierten - Wellenende befindet sich eine Wellen-Naben-Verbindung 152, über die ein zweiter Lamellenträgerflansch 153 drehstarr auf der zweiten Getriebeeingangswelle 151 angeordnet ist. Auf dem Lamellenträgerflansch 153 ist der Innenlamellenträger 154 der zweiten Kupplung 150 befestigt.

Zwischen diesem zweiten Innenlamellenträger 154 und dem ersten Innenlamellenträger 54 ist der zweite Außenlamellenträger 140 mit dem zweiten Lamellentragabschnitt 158 angeordnet. Er ist am ersten Außenlamellenträger 40 befestigt. Der zweite Innenlamellenträger 154 und zweite Lamellentragabschnitt 158 fixieren das zweite-Lamellenpaket 155 in bekannter Weise.

Wird die zweite Kupplung 150 betätigt, wird bei sich öffnender erster Kupplung 50 der zweite Außenlamellenträger 140 mit dem zweiten Innenlamellenträger 154 verbunden. Das Motordrehmoment wird somit auf die zweite Getriebeeingangswelle 151 übertragen. Entsprechende Gangräder leiten die Rotationsbewegung drehmomentverändert auf die nicht dargestellte, den Antriebsstrang antreibende Getriebeausgangswelle weiter.

Nach Figur 1 werden die beiden Kupplungen 50, 150 elektromechanisch betätigt. Dazu ist im Getriebegehäuse 10 pro Kupplung 50, 150 ein Exzenterantrieb 60, 160 ein Hebelgetriebe 90, 190, ein Einrücklager 70, 170 und eine Membranfeder 100, 200 angeordnet.

Die Membranfeder 100, 200 ist eine Tellerfeder, die mit einer Menge von Schlitzen versehen ist, die sich ausgehend von einem Zentralring 101, 201 sowohl nach radial außen als auch nach radial innen erstrecken. Die durch die Schlitzungen entstehenden Federzungen 103, 104; 203, 204 haben unterschiedliche Längen. Bei der Membranfeder 100 sind die inneren Federzungen 103 z.B. 3,7-mal so lang wie die äußeren Federzungen. Die inneren Federzungen 203 der Membranfeder 200 sind um den Faktor 3,3 länger als die äußern Zungen 204.

Die Membranfeder 100, 200 bildet einen Ring aus einer Vielzahl von zweiseitigen Hebeln. Das jeweilige Hebelzentrum bildet der Zentralring 101, 201. Letzterer liegt jeweils auf einem auf das entsprechende Lamellenpaket 55, 155 wirkenden Druckring 80, 180 auf. Die äußeren Federzungen 104, 204 hintergreifen einen ringförmigen Innenrand 48, 49 des Eingangsgehäuses 141. Die inneren Federzungen 103, 203 liegen jeweils an einem Einrücklager 70, 170 an. Im Anlagebereich sind die Enden der Federzungen 103, 203 konvex gekrümmt gestaltet. Alternativ hierzu kann die Membranfeder 100, 200 auch ohne radial nach außen abstehende Federzungen 104, 204 gestaltet werden.

Die Membranfeder 100, 200 ist aus einem hochwertigen Vergütungsstahl hergestellt und speziell wärme- und oberflächenbehandelt.

Die Druckringe 80, 180 setzen sich aus einem halbprofiligen Rohrtorus 81, 181 und einer Vielzahl von Fingern 82, 182 zusammen. Die Finger 82, 182 stehen tangential und horizontal vom halbprofiligen Rohrtorus 81, 181 ab. Die Finger 82 greifen durch im ersten Außenlamellenträger 40 bzw. im äußeren Lamellentragabschnitt 58 vorhandene Fenster 46 hindurch. Ihre freien Enden liegen bei betätigter Kupplung 50, 150 auf dem entsprechenden Lamellenpaket 55, 155 auf.

Die den Membranfedern 100, 200 abgewandten z.B. geblechten Lagerringe 71, 171; 72, 172 der Einrücklager 70, 170 sind auf den jeweiligen am Getriebegehäuse 10 befestigten Führungsrohren 75, 175 geführt. Das Führungsrohr 75 der ersten Kupplung 50 umgibt hierbei bereichsweise das zweite Führungsrohr 175 der Kupplung 150.

Das Einrücklager 170 der zweiten Kupplung 150 liegt über dem nicht rotierenden Lagerring 171 an einem um das äußere Führungsrohr 75 herumgeführten Gabelhebel 191 an. Letzterer hat dazu z.B. zwei Anlagezapfen 192. Der Gabelhebel 191 ist im unteren Gehäusebereich in einem Schwenklager 195 gelagert. Die Schwenkachse des Schwenklagers 195 kreuzt die Mittellinie 5 der Eingangswelle 20 senkrecht.

Oberhalb der Gabelung des Gabelhebels 191 ist der Gabelhebel um ca. 13 Winkelgrade nach rechts abgewinkelt. An seinem freien Ende trägt er eine Laufrolle 193, z.B. ein Rillenkugellager.

Zum verschwenken des Gabelhebels 191 wird ein im Getriebegehäuse starr gelagerter Antrieb 160 verwendet, der beispielsweise einen Elektromotor 161, ein Stirnradgetriebe 163 und eine Kurvenscheibe 167 umfasst. Der Elektromotor 161 treibt dabei über die Stirnräder 164-166 die Kurvenscheibe 167 an. Auf der Kurvenscheibe 167 liegt die Laufrolle 193 an. Ggf. ist der Motor 161 zur Realisierung eines geregelten Antriebs mit ein Tachogenerator oder einem Winkelmesssystem ausgestattet.

Bei der ersten Kupplung 50 liegt das Schwenklager 95 des Gabelhebels 91 oberhalb des Führungsrohres 75, während der Antrieb unterhalb des Führungsrohres 75 angeordnet ist. Der stehende Gabelhebel 91 kontaktiert das Einrücklager 70 über jeweils eine gewölbte Anlagekontur 92 pro Arm des Gabelhebels 91. Der untere Bereich des Gabelhebels 91 ist um beispielsweise 35 Winkelgrade nach rechts abgewinkelt ausgeführt.

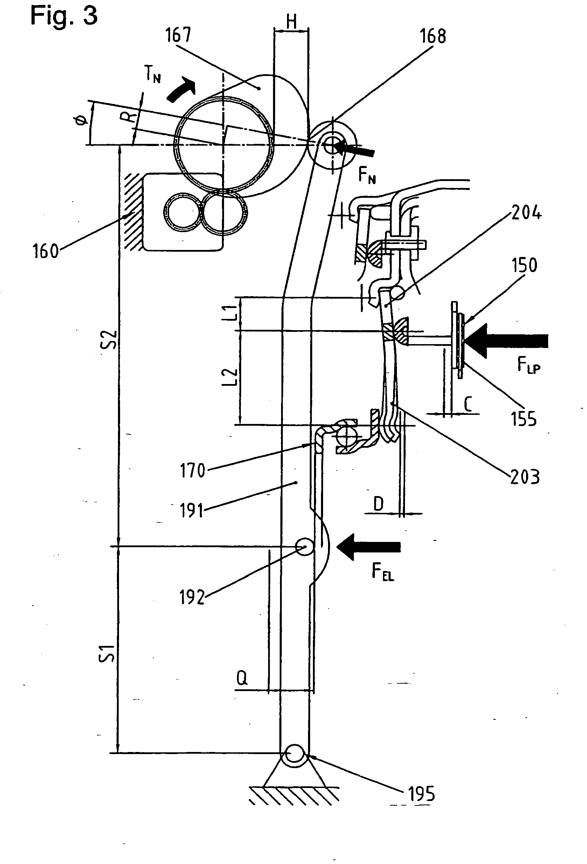

Das vom Antrieb 160 an der Kurvenscheibe 167 aufzubringende Moment beim Betätigen der zweiten Kupplung 150 ergibt sich - nach Figur 3 wie folgt:

Um die erforderliche Anpresskraft $F_{LP}$ am zweiten Lamellenpaket 155 zu erzielen, muss an der Kurvenscheibe 167 das Nockendrehmoment $T_N$

$$T_N = F_N \times R(\phi)$$

vorhanden sein. Dabei beträgt die Nockenkontaktkraft $F_N$

$$F_N = F_{EL}/(i_2+1).$$

$R(\phi)$ ist der wirksame Hebelarm der Kurvenscheibe 167 bezüglich des Kontaktpunktes 168.

Die Kraft $F_{EL}$ am Einrücklager 170 hat die Formel

$$F_{EL} = F_{LP}/(i_1+1)+F_{MF}.$$

$i_2$ ist eine Übersetzung

$$i_2 = S_2/S_1,$$

bei der $S_1$ die Länge des Hebelabschnitts des Gabelhebels 191 beschreibt, die zwischen dem gehäusefesten Schwenklager 195 und dem Anlagezapfen 192 liegt, während $S_2$ die Länge des Hebelabschnitts ist, die zwischen dem gehäusefesten Schwenklager 195 und der Mittellinie der Laufrolle 193 gelegen ist.

$F_{LP}$ ist die erforderliche Anpresskraft im Lamellenpaket 155 und $i_1$ eine Übersetzung $i_1 = L_2/L_1$, bei der zumindest annähernd $L_2$ die Länge der inneren Zungen 204 der Membranfeder 200 ist, während $L_1$ die Länge der entsprechenden äußern Zungen 203 angibt. Diese spezielle Übersetzung kann z.B. in = 2 sein.

$F_{MF}$ ist die Rückstellkraft der Membranfeder 200.

Der Hub H der Kurvenscheiben 167 ergibt sich wie folgt:

$$H = (i_2+1) \times Q$$

Q ist hier der Hub des Einrücklagers 170. Er errechnet sich aus

$$Q = (i_1+1) \times C + D.$$

C ist das Lüftspiel am Lamellenpaket 155 und D ist die Durchbiegung der Zungen 203.

Das Moment $T_N$ und der Hub H lassen sich für die erste Kupplung 50 in vergleichbarer Weise errechnen.

Die Kurvenscheiben 67, 167 weisen jeweils eine besondere Kontur auf. Durch letztere wird in Einzelnen eine spezielle Drehwinkel-Weg Kennlinie erzeugt. Die Kontur ist so gestaltet, dass sie zur Überbrückung des Kupplungslüftspiels nur einen kleinen Drehwinkel benötigt, während sie im Bereich des Anlegepunktes - also im Regelbereich - für eine kleine Wegänderung einen großen Drehwinkel verwendet. Aus der Drehwinkeländerung der jeweiligen Kurvenscheibe 67, 167 ergibt sich eine axiale Hubänderung am jeweiligen Einrücklager 70, 170 bzw. am entsprechenden Druckring 80, 180.

Die Figur 2 zeigt eine Variante zu Figur 1. Hier werden die Antriebe zum Lüften der Kupplungen 50, 150 verwendet. Das Schließen übernehmen zwei Schraubendruckfedern 300, 400. Beide Schraubendruckfedern 300, 400 stützen sich dazu zwischen dem Getriebegehäuse 10 und dem entsprechenden äußeren Ende des jeweiligen Gabelhebels 91, 191 ab. Am Getriebegehäuse 10 und an den Enden der Gabelhebel 91, 191 sind Federtellerwippen 303, 304; 403, 404 angeordnet, zwischen denen die Schraubendruckfedern 300, 400 immer vorgespannt eingebaut sind. Ggf. können die Druckfedern - bei einer Veränderung der Anlenkung am Getriebegehäuse 10 - auch durch Zug, Biege- oder Torsionsfedern ersetzt werden.

Bezugszeichenliste

| | |
|---|---|
| 1 | Trockenraum; Getriebebereich, trocken |
| 2 | Getriebenassraum |
| 3 | Zweimassenschwungrad, Schwungrad |
| 5 | Rotationsachse des Kupplungssystems |
| 10 | Getriebegehäuse, Gehäuseglocke |
| 11 | Trennwand |
| 20 | Kupplungseingangswelle |
| 21 | Wellen-Naben-Verbindung |
| 22 | Mitnehmerscheibensitz |
| 30 | Mitnehmerscheibe |
| 35 | Dämpfer, nasslaufend |
| 38 | Wälzlager |
| 40 | erster Außenlamellenträger, Kupplungsbauteil |
| 45 | Innenraum |
| 46 | Fenster |
| 47 | Hauptnabe |
| 48 | Innenrand, ringförmig für (50) |
| 49 | Innenrand, ringförmig für (150) |
| 50 | erste Reibkupplung, Kupplung |
| 51 | erste Getriebeeingangswelle |
| 52 | Wellen-Naben-Verbindung |
| 53 | erster Lamellenträgerflansch |
| 54 | erster Innenlamellenträger |
| 55 | Lamellenpaket, Reibpaarung |
| 56 | Außenlamellen |
| 57 | Innenlamellen |
| 58 | Lamellentragabschnitt, außen |
| 59 | Anschlag, Anschlagring |
| 60 | erstes Stellglied |
| 61 | Elektromotor, Antrieb |
| 63 | Stirnradgetriebe, Antrieb |
| 64,65,66 | Stirnräder |
| 67 | Kurvenscheibe, Nocken |
| 70 | Einrücklager |
| 71 | Lagerring, hebelseitig |
| 72 | Lagerring, membranfederseitig |
| 75 | Führungsrohr |
| 80 | Druckring |
| 81 | Rohrtorus, halbprofilig |
| 82 | Finger |
| 90 | Hebelgetriebe, erstes |
| 91 | Gabelhebel |
| 92 | Anlagekontur |
| 93 | Laufrolle |
| 95 | Schwenklager, gehäuseseitig |
| 100 | Membranfeder, Tellerfeder, Rückstellelement Hebelgetriebe, zweites |

| | |
|---|---|
| 101 | Zentralring |
| 103 | Federzungen, lang, innen |
| 104 | Federzungen, kurz, außen |
| 140 | zweiter Außenlamellenträger |
| 141 | Eingangsgehäuse |
| 150 | zweite Reibkupplung, Kupplung |
| 151 | zweite Getriebeeingangswelle |
| 152 | Wellen-Naben-Verbindung |
| 153 | zweiter Lamellenträgerflansch |
| 154 | zweiter Innenlamellenträger |
| 155 | Lamellenpaket, Reibpaarung |
| 156 | Außenlamellen |
| 157 | Innenlamellen |
| 158 | Lamellentragabschnitt, innen |
| 159 | Anschlag |
| 160 | zweites Stellglied, Antrieb |
| 161 | Elektromotor |
| 163 | Stirnradgetriebe |
| 164-166 | Stirnräder |
| 167 | Kurvenscheibe, Nocken |
| 168 | Kontaktpunkt |
| 170 | Einrücklager |
| 171 | Lagerring, hebelseitig |
| 172 | Lagerring, membranfederseitig |
| 175 | Führungsrohr |
| 180 | Druckring |
| 181 | Rohrtorus, halbprofilig |
| 182 | Finger |
| 190 | Hebelgetriebe, zweites |

| | |
|---|---|
| 191 | Gabelhebel |
| 192 | Anlagezapfen |
| 193 | Laufrolle |
| 195 | Schwenklager, gehäuseseitig |
| 200 | Federelemente, Rückholfedern, Schraubenfedern |
| 201 | Zentralring |
| 203 | Federzungen, lang, innen |
| 204 | Federzungen, kurz, außen |
| 300 | Federelemente, Schraubendruckfedern |
| 303 | Federtellerwippe, hebelseitig |
| 304 | Federtellerwippe, gehäuseseitig |
| 400 | Federelemente, Schraubendruckfedern |
| 403 | Federtellerwippe, hebelseitig |
| 404 | Federtellerwippe, gehäuseseitig |

**Patentansprüche**

1. Kupplungssystem für Kraftfahrzeugantriebe mit einer Kupplungseingangswelle (20) und mindestens einer Getriebeeingangswelle (51, 151), wobei die Getriebeeingangswelle (51, 151) über eine in einem Getrieberaum gelegene Reibkupplung (50, 150) mit der Kupplungseingangswelle (20) verbunden und ein Stellglied (60, 160) vorgesehen ist, das ein Einrücklager (70, 170) und mindestens ein Hebelgetriebe (90, 190; 100, 200) aufweist, **dadurch gekennzeichnet, dass** mindestens eine Reibpaarung (55, 155) über ein Stellglied (60, 160) zum Einkuppeln gegen einen Anschlag (59, 159) gepresst wird, und das Stellglied (60, 160) ferner einen elektrischen Antrieb (61, 63; 171, 163) umfasst, der mit einer Kurvenscheibe (67, 167) gekoppelt ist, wobei die Kurvenscheibe (67, 167) eine Kontur aufweist, die zur Überbrückung des Kupplungslüftspiels einen kleinen Drehwinkel benötigt, während sie im Bereich des Anlegepunktes - also im Regelbereich - einen großen Drehwinkel verwendet.

2. Kupplungssystem gemäß Anspruch 1, **dadurch gekennzeichnet, dass** die Reibkupplung (50, 150) flüssigkeitsgeschmiert und gekühlt ist.

**3.** Kupplungssystem gemäß Anspruch 2, **dadurch gekennzeichnet, dass** der Getrieberaum ein Getriebenassraum (2) ist.

**4.** Kupplungssystem gemäß Anspruch 1, **dadurch gekennzeichnet, dass** der elektrische Antrieb (61, 63; 161, 163) ein Elektromotor (61, 161) vorzugsweise mit nachgeschaltetem Getriebe (63, 163) ist.

**5.** Kupplungssystem gemäß Anspruch 4, **dadurch gekennzeichnet, dass** das nachgeschaltete Getriebe (63, 163) ein planes Stirnrad oder Planetengetriebe ist, dessen Abtrieb (66, 166) mit der Kurvenscheibe (67, 167) gekoppelt ist.

**6.** Kupplungssystem gemäß Anspruch 5, **dadurch gekennzeichnet, dass** der Kurvenscheibe (67, 167) zwei Hebelgetriebe (90, 190; 100, 200) nachgeordnet sind, wobei die Kurvenscheibe (67, 167) jeweils direkt auf einen Gabelhebel (91, 191) des Hebelgetriebes (90, 190) wirkt.

**7.** Kupplungssystem gemäß Anspruch 6, **dadurch gekennzeichnet, dass** das Hebelgetriebe (90, 190) über das Einrücklager (70, 170) auf ein weiteres Hebelgetriebe (100, 200) wirkt.

**8.** Kupplungssystem gemäß den Ansprüchen 6 und 7, **dadurch gekennzeichnet, dass** das weitere Hebelgetriebe (100, 200) eine Membranfeder ist, die sich am Außenlamellenträger (40) und an einem das jeweilige Lamellenpaket (55, 155) belastenden Druckring (80, 180) abstützt.

**9.** Kupplungssystem gemäß Anspruch 8, **dadurch gekennzeichnet, dass** die Membranfeder (100, 200) eine Tellerfeder ist, die mit einer Menge von Schlitzen versehen ist, die sich ausgehend von einem Zentralring (101, 201) nach radial innen durch innere Federzungen (103, 203) und sich vorzugsweise zusätzlich nach radial außen durch äußere Federzungen (104, 204) erstrecken.

**10.** Kupplungssystem gemäß Anspruch 9, **dadurch gekennzeichnet, dass** die durch die Schlitzungen entstehenden Federzungen (103, 104; 203, 204) unterschiedliche Längen haben, wobei die inneren Federzungen (103, 203) zweieinhalb- bis viermal länger sind als die äußeren Federzungen (104, 204).

**11.** Kupplungssystem nach mindestens einem der vorangegangenen Ansprüche, **dadurch gekennzeichnet, dass** die Reibkupplung eine flüssigkeitsgeschmierte und- gekühlte Mehrlamellenkupplung ist mit mindestens einem Außenlamellenträger (40, 140), mindestens einem Innenlamellenträger (54, 154) und mindestens einem Lamellenpaket (55, 155).

**12.** Kupplungssystem nach mindestens einem der vorangegangenen Ansprüche, **dadurch gekennzeichnet, dass** der Druckring (80, 180) eine Vielzahl von Fingern (82, 182) aufweist, die durch Fenster (46) im ersten Außenlamellenträger (40) und/oder zweiten Au-βenlamellenträger (140) in einen rotierenden Innenraum (45) greifen, um an dem jeweiligen Lamellenpaket (55, 155) zur Anlage zu kommen.

**13.** Kupplungssystem gemäß Anspruch 7, **dadurch gekennzeichnet, dass** das einzelne Einrücklager (70, 170) jeweils einen - einen Gabelhebel (91, 191) kontaktierenden - Lagerring (71, 171) hat, der axial und radial an einem gehäusefesten Führungsrohr (75, 175) gleitfähig anliegt.

**14.** Kupplungssystem nach mindestens einem der vorangegangenen Ansprüche, **dadurch gekennzeichnet, dass** zwischen der Kupplungseingangswelle (20) und den beiden Reibkupplungen (50, 150) im Getriebenassraum (2) ein Dämpfer (35) angeordnet ist.

## Claims

**1.** Clutch system for motor vehicle drives, having a clutch input shaft (20) and at least one gearbox input shaft (51, 151), wherein the gearbox input shaft (51, 151) is connected to the clutch input shaft (20) via a friction clutch (50, 150) which is situated in a gearbox chamber, and an actuator (60, 160) is provided which has an engagement bearing (70, 170) and at least one lever mechanism (90, 190; 100, 200), **characterized in that** at least one friction pairing (55, 155) is, for clutch engagement, pressed against a stop (59, 159) by means of an actuator (60, 160), and the actuator (60, 160) furthermore comprises an electric drive (61, 63; 161, 163) which is coupled to a cam disc (67, 167), wherein the cam disc (67, 167) has a contour which requires a small angle of rotation to overcome the clutch air play, whereas said cam disc uses a large angle of rotation in the region of the biting point - that is to say in the regulating region.

**2.** Clutch system according to Claim 1, **characterized in that** the friction clutch (50, 150) is liquid-lubricated and cooled.

**3.** Clutch system according to Claim 2, **characterized in that** the gearbox chamber is a gearbox wet chamber (2).

**4.** Clutch system according to Claim 1, **characterized in that** the electric drive (61, 63; 161, 163) is an electric motor (61, 161), preferably with a downstream gearing (63, 163).

**5.** Clutch system according to Claim 4, **characterized in that** the downstream gearing (63, 163) is a planar spur gear or planetary gear set, the drive output (66, 166) of which is coupled to the cam disc (67, 167).

**6.** Clutch system according to Claim 5, **characterized in that** two lever mechanisms (90, 190; 100, 200) are positioned downstream of the cam disc (67, 167), wherein the cam disc (67, 167) acts in each case directly on a forked lever (91, 191) of the lever mechanism (90, 190).

**7.** Clutch system according to Claim 6, **characterized in that** the lever mechanism (90, 190) acts via the engagement bearing (70, 170) on a further lever mechanism (100, 200).

**8.** Clutch system according to Claims 6 and 7, **characterized in that** the further lever mechanism (100, 200) is a diaphragm spring which is supported on the outer plate carrier (40) and on a thrust ring (80, 180) which exerts a load on the respective plate pack (55, 155).

**9.** Clutch system according to Claim 8, **characterized in that** the diaphragm spring (100, 200) is a plate spring which is provided with a multiplicity of slots which extend from a central ring (101, 201) radially inward through inner spring tongues (103, 203) and preferably additionally radially outward through outer spring tongues (104, 204).

**10.** Clutch system according to Claim 9, **characterized in that** the spring tongues (103, 104; 203, 204) which are formed by the slots have different lengths, wherein the inner spring tongues (103, 203) are two and a half to four times longer than the outer spring tongues (104, 204).

**11.** Clutch system according to at least one of the preceding claims, **characterized in that** the friction clutch is a liquid-lubricated and liquid-cooled multiplate clutch with at least one outer plate carrier (40, 140), at least one inner plate carrier (54, 154) and at least one plate pack (55, 155).

**12.** Clutch system according to at least one of the preceding claims, **characterized in that** the thrust ring (80, 180) has a multiplicity of fingers (82, 182) which extend through windows (46) in the first outer plate carrier (40) and/or second outer plate carrier (140) into a rotating interior space (45), so as to bear against the respective plate pack (55, 155).

**13.** Clutch system according to Claim 7, **characterized in that** the single engagement bearing (70, 170) has in each case a bearing ring (71, 171) which makes contact with a fork lever (91, 191) and which bears slidably axially and radially against a guide tube (75, 175) which is fixed with respect to the housing.

**14.** Clutch system according to at least one of the preceding claims, **characterized in that** a damper (35) is arranged between the clutch input shaft (20) and the two friction clutches (50, 150) in the gearbox wet chamber (2).

**Revendications**

**1.** Système d'embrayage pour des entraînements de véhicules automobiles comprenant un arbre d'entrée d'embrayage (20) et au moins un arbre d'entrée de transmission (51, 151),
l'arbre d'entrée de transmission (51, 151) étant connecté par le biais d'un embrayage à friction (50, 150) situé dans un espace de la transmission à l'arbre d'entrée d'embrayage (20), et un actionneur (60, 160) étant prévu, lequel présente un palier d'embrayage (70, 170) et au moins un mécanisme à levier (90, 190 ; 100, 200),
**caractérisé en ce qu'**
au moins un accouplement de friction (55, 155) est pressée par le biais d'un actionneur (60, 160) en vue de l'accouplement contre une butée (59, 159), et l'actionneur (60, 160) comprend en outre un entraînement électrique (61, 63 ; 171, 163) qui est accouplé à une came (67, 167), la came (67, 167) présentant un contour qui nécessite un petit angle de rotation pour surmonter le jeu d'embrayage tandis qu'il utilise un grand angle de rotation dans la région du point d'application, c'est-à-dire dans la plage de réglage.

**2.** Système d'embrayage selon la revendication 1, **caractérisé en ce que** l'embrayage à friction (50, 150) est refroidi et lubrifié par un liquide.

**3.** Système d'embrayage selon la revendication 2, **caractérisé en ce que** l'espace de transmission est un espace humide de transmission (2).

**4.** Système d'embrayage selon la revendication 1, **caractérisé en ce que** l'entraînement électrique (61, 63 ; 161, 163) est un moteur électrique (61, 161), de préférence avec une transmission (63, 163) montée en aval.

**5.** Système d'embrayage selon la revendication 4, **caractérisé en ce que** la transmission (63, 163) montée en aval est un pignon droit ou un engrenage planétaire, dont l'entraînement de sortie (66, 166) est accouplé à la came (67, 167).

**6.** Système d'embrayage selon la revendication 5, **caractérisé en ce que** deux mécanismes à levier (90, 190 ; 100, 200) sont montés en aval de la came (67, 167), la came (67, 167) agissant à chaque fois directement sur un levier à fourche (91, 191) du mécanisme à levier (90, 190).

**7.** Système d'embrayage selon la revendication 6, **caractérisé en ce que**
le mécanisme à levier (90, 190) agit par le biais du palier d'embrayage (70, 170) sur un autre mécanisme à levier (100, 200).

**8.** Système d'embrayage selon les revendications 6 et 7,
**caractérisé en ce que** l'autre mécanisme à levier (100, 200) est un ressort à membrane qui s'appuie sur le support de disques extérieurs (40) et sur une bague de pression (80, 180) sollicitant le paquet de disques respectif (55, 155).

**9.** Système d'embrayage selon la revendication 8, **caractérisé en ce que** le ressort à membrane (100, 200) est un ressort Belleville, qui est muni d'une pluralité de fentes qui s'étendent à partir d'une bague centrale (101, 201) radialement vers l'intérieur à travers des langues à ressort intérieures (103, 203) et qui s'étendent de préférence en outre radialement vers l'extérieur à travers des langues à ressort extérieures (104, 204).

**10.** Système d'embrayage selon la revendication 9, **caractérisé en ce que** les langues à ressort (103, 104 ; 203, 204) produites par les langues à fentes ont des longueurs différentes, les langues à ressort intérieures (103, 203) étant deux fois et demie à quatre fois plus longues que les langues à ressort extérieures (104, 204).

**11.** Système d'embrayage selon au moins l'une quelconque des revendications précédentes, **caractérisé en ce que** l'embrayage à friction est un embrayage à disques multiples lubrifié et refroidi par un liquide, avec au moins un support de disques extérieurs (40, 140), au moins un support de disques intérieurs (54, 154), et au moins un paquet de disques (55, 155).

**12.** Système d'embrayage selon au moins l'une quelconque des revendications précédentes, **caractérisé en ce que** la bague de pression (80, 180) présente une pluralité de doigts (82, 182) qui viennent en prise à travers des fenêtres (46) dans le premier support de disques extérieurs (40) et/ou dans le deuxième support de disques extérieurs (140) dans un espace interne rotatif (45), afin de venir en appui contre le paquet de disques respectif (55, 155).

**13.** Système d'embrayage selon la revendication 7, **caractérisé en ce que** le palier d'embrayage individuel (70, 170) a à chaque fois une bague de palier (71, 171) venant en contact avec un levier à fourche (91, 191), qui s'applique de manière coulissante axialement et radialement contre un tube de guidage fixé au boîtier (75, 175).

**14.** Système d'embrayage selon au moins l'une quelconque des revendications précédentes, **caractérisé en ce qu'**entre l'arbre d'entrée d'embrayage (20) et les deux embrayages à friction (50, 150) est disposé un amortisseur (35) dans l'espace humide de transmission (2).

# Fig. 1

EP 2 147 223 B1

## Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1521003 A1
- DE 10334867 A1

- US 20010006921 A1